# EUROPEAN PATENT APPLICATION

(11) **EP 4 523 540 A1**
(43) Date of publication of application: **19.03.2025**
(21) Application number: 23803556.2
(22) Date of filing: 09.05.2023
(51) Int. Cl.: A22C 21/00, A22C 17/00, B26D 1/147

(54) **ROUND BLADE FOR SLICING, SLICING DEVICE, AND SLICING METHOD FOR WORKPIECE**

(30) Priority: 11.05.2022 JP 2022078115
(71) Applicant: MAYEKAWA MFG. CO., LTD., Tokyo 135-8482 (JP)
(72) Inventor: KODAMA, Ryuji, Tokyo 135-8482 (JP); USUI, Hiroyuki, Tokyo 135-8482 (JP); UMEDA, Seiichiro, Tokyo 135-8482 (JP); GOTO, Osamu, Tokyo 135-8482 (JP); HANE, Shinji, Tokyo 135-8482 (JP); TOYODA, Naoki, Tokyo 135-8482 (JP)
(74) Representative: Zimmermann, Tankred Klaus
(86) International application number: PCT/JP2023/017413
(87) International publication number: WO 2023/219079

(57) **Abstract**

In a round blade for slicing, a plurality of blade surfaces each having an arc shape and centered on a rotation center of a round blade main body are disposed to be spaced apart from each other on an outer peripheral portion of the round blade main body. A non-blade surface portion is disposed between the adjacent blade surfaces on an outer peripheral portion of the round blade main body. An outer end portion of the non-blade surface portion in a radial direction is located radially inward with respect to an outer end portion of the blade surface in the radial direction.

## Description

### [Technical Field]

The present invention relates to a round blade for slicing, a slicing device, and a slicing method for a workpiece that separate a meat part from a workpiece such as bone-in meat.

Priority is claimed on Japanese Patent Application No. 2022-078115, filed May 11, 2022, the content of which is incorporated herein by reference.

### [Background Art]

In recent years, a meat part separating device (a boning device) that mechanically separates a meat part from a bone part of bone-in meat such as poultry leg meat has been developed.

This type of meat part separating device makes incisions in advance at appropriate places in a meat part of bone-in meat using a cutting device, and then separates the meat part from the bone part using a meat separator while a clamper holding an end portion of the bone part is lifted. The meat separator has a tearing-off claw that is inserted into the incision in the meat part so as to come into contact with an outer peripheral surface of the bone part of the bone-in meat. The meat part separating device can separate the meat part from the bone part by lifting the bone part while pressing the tearing-off claw of the meat separator against the outer peripheral surface of the bone part of the bone-in meat.

Incidentally, in the case of poultry leg meat, there is a knee joint in the middle of the bone part in a longitudinal direction, and a part of the meat part is firmly connected to the knee joint by tendons or fascia. For this reason, a meat part separating device that handles poultry leg meat and the like is equipped with a cutter device for cutting the tendons and fascia that connect the meat part and the bone part (refer to, for example, Patent Document 1).

A meat part separating device (a boning device) described in Patent Document 1 includes a meat separator for tearing off a meat part from a bone part, and a cutter device for cutting tendons and fascia. The cutter device uses a round blade that is rotationally driven. The round blade has a uniform blade surface over the entire outer peripheral edge portion.

When the meat part is actually separated from bone-in meat, the tearing-off claw of the meat separator is brought into contact with the outer peripheral surface of the bone part of the bone-in meat and the bone part is raised in this state, and thus the meat part is separated by the meat separator until a position at which the tendons and fascia of the knee joint are exposed. Then, in this state, the round blade of the cutter device is brought close to the knee joint, and the tendons and fascia near the knee joint are cut by the round blade. Then, the bone part of the bone-in meat is further raised, and thus the remaining meat part is separated from the bone part by the meat separator.

### [Citation List]

### [Patent Document]

[Patent Document 1]
Japanese Patent No. 5331244

### [Summary of Invention]

### [Technical Problem]

However, when the tendons or fascia are cut with the round blade of the cutter device in the state in which the tendons or fascia are exposed by the meat separator as described above, it is necessary to accurately control a cutting position with the round blade in a longitudinal direction of the bone part in millimeter units. When the cutting position with the round blade deviates slightly from an appropriate position, extra meat parts will remain on the bone part, and the yield of the meat parts as a product is reduced. Furthermore, in accordance with the cutting position with the round blade, a hole may be formed in the separated meat part, leading to a decrease in the quality of the meat part as a product.

As a countermeasure against this, it is conceivable to make that a rotating round blade is lightly pressed in a direction perpendicular to the longitudinal direction against the outer peripheral surface of the bone part that moves relatively in the longitudinal direction, and the meat part including tendons and fascia around the bone part is continuously sliced away. However, in this case, when trying to slice the meat part away while continuously rotating the round blade, a blade edge of the round blade may cut into the cartilage or hard bones of the bone-in meat, and thus making it difficult to continue smooth slicing off of the meat part. Furthermore, when the blade edge of the round blade cuts into the cartilage or hard bones of the bone-in meat, residual bone may enter the separated meat part, or chipping of the blade edge of the round blade may occur more easily.

Aspects of the present invention provide a round blade for slicing, a slicing device and a slicing method for a workpiece which can suppress a blade edge cutting into a core part of a workpiece.

### [Solution to Problem]

A round blade for slicing, a slicing device and a slicing method for a workpiece according to the present invention employ the following configuration.

In a round blade for slicing according to the present invention, a plurality of blade surfaces each having an arc shape and centered on a rotation center of a round blade main body are disposed to be spaced apart from each other on an outer peripheral portion of the round blade main body, and a non-blade surface portion is disposed between the adjacent blade surfaces, and an outer end portion of the non-blade surface portion in a radial direction is located radially inward with respect to an outer end portion of the blade surface in the radial direction.

With the above configuration, when a meat part of a workpiece is sliced away, the rotating round blade main body is lightly pressed against the core part of a workpiece such as a bone part of bone-in meat, and while rotating the round blade main body, the round blade main body is moved relative to the core part of the workpiece in a longitudinal direction. At this time, as the round blade main body rotates, the blade surface and the non-blade surface portion on the outer periphery of the round blade main body alternately face the workpiece. Thus, when the blade edge of a part of the blade surface tries to cut into the workpiece, immediately after that, the cutting-in is released by the non-blade surface portion, and as a result, the cutting-in of the blade edge into the core part of the workpiece is suppressed.

An outer edge portion of the non-blade surface portion in the radial direction may be formed in a linear shape that connects end portions of blade edges of the adjacent blade surfaces in a circumferential direction.

In this case, since there is no concave stepped portion between the blade surface and the non-blade surface portion, chipping of the blade surface when it comes into contact with a hard part of the workpiece, and catching of the separated meat part are less likely to occur.

A slicing device according to the present invention includes a cutter device having any one of the round blades for slicing described above, a workpiece holding part configured to hold a workpiece, a relative movement device configured to relatively move the workpiece holding part and the cutter device in a slicing direction in which a meat part of the workpiece is sliced, and a slicing position operating part configured to move the round blade for slicing of the cutter device toward and away with respect to the workpiece, that moves relatively in the slicing direction, in a direction intersecting the slicing direction.

In the above configuration, when the meat part of the workpiece is sliced away, the workpiece is held by the workpiece holding part, and the workpiece holding part and the cutter device are relatively moved in the slicing direction by the relative movement device. In this state, the round blade for slicing of the cutter device is rotated, and the slicing position operating part brings the round blade for slicing of the cutter device close to a slicing portion of the workpiece. Thus, the round blade main body of the round blade for slicing is pressed against a core part of the workpiece, and as the workpiece is relatively moved in the slicing direction, the meat part of the workpiece is sliced by the round blade main body. At this time, since the blade surface and the non-blade surface portion on the outer periphery of the round blade main body alternately face the workpiece, the cutting-in of the blade edge into the core part of the workpiece is suppressed.

The workpiece may be bone-in meat with a meat part attached to a bone part, the workpiece holding part may hold the bone part of the bone-in meat, and the cutter device may slice the meat part of the bone-in meat from the bone part.

In this case, since there is a complicated joint between the bone parts, and cartilage and hard bones are mixed in a complicated manner in bone part, it is possible to reliably slice away the meat part from the bone part of the bone-in meat, which was thought to be difficult in the related art.

A method for slicing a workpiece according to the present invention includes while rotating any one of the round blades for slicing above described, relatively moving the workpiece and the round blade for slicing in a slicing direction, and displacing the round blade for slicing from a direction intersecting the slicing direction with respect to the relatively moving workpiece.

In this case, the round blade for slicing in which the blade surfaces and the non-blade surface portions are alternately disposed on the outer peripheral portion thereof rotates, and in this state, the round blade for slicing is pressed against the relatively moving workpiece in a direction that intersects the slicing direction. As a result, the meat part of the workpiece can be easily sliced away from the core part of the workpiece without causing the blade edge of the round blade for slicing to cut into the core part.

The workpiece may be bone-in meat with a meat part attached to a bone part, and a position of the slicing blade in a direction intersecting the slicing direction may be displaced along an outer surface shape of the bone part with respect to the bone-in meat that moves relatively in a longitudinal direction of the bone part.

### [Advantageous Effects of Invention]

In the round blade for slicing according to the present invention, when the round blade main body rotates, the blade surfaces and the non-blade surface portions on the outer periphery of the round blade main body alternately face the workpiece, and thus it is possible to suppress the blade edge cutting into the core portion of the workpiece.

Therefore, in the case in which the slicing device using the round blade for slicing and the slicing method according to the present invention are adopted, when the workpiece is bone-in meat, due to the smooth slicing with respect to the meat part, a decrease in the yield of the meat part as a product, deterioration in the quality such as hole opening, and the like can be suppressed, and mixing of residual bones into the meat part and occurrence of chipping of the blade edge due to the blade edge cutting into the bone part can be also suppressed.

### [Brief Description of Drawings]

FIG. 1 is a front view of a slicing device according to an embodiment of the present invention.
FIG. 2 is a top view of a plurality of cutter devices according to the embodiment of the present invention.
FIG. 3 is a top view of a round slicing blade according to the embodiment of the present invention.
FIG. 4 is a front view showing an operation state of the slicing device according to the embodiment of the present invention.

### [Description of Embodiments]

An embodiment of the present invention will be described below on the basis of the drawings. Materials, shapes, relative arrangements, and the like of the constituent components described in the following embodiment are not intended to limit the scope of the present invention unless otherwise specified.

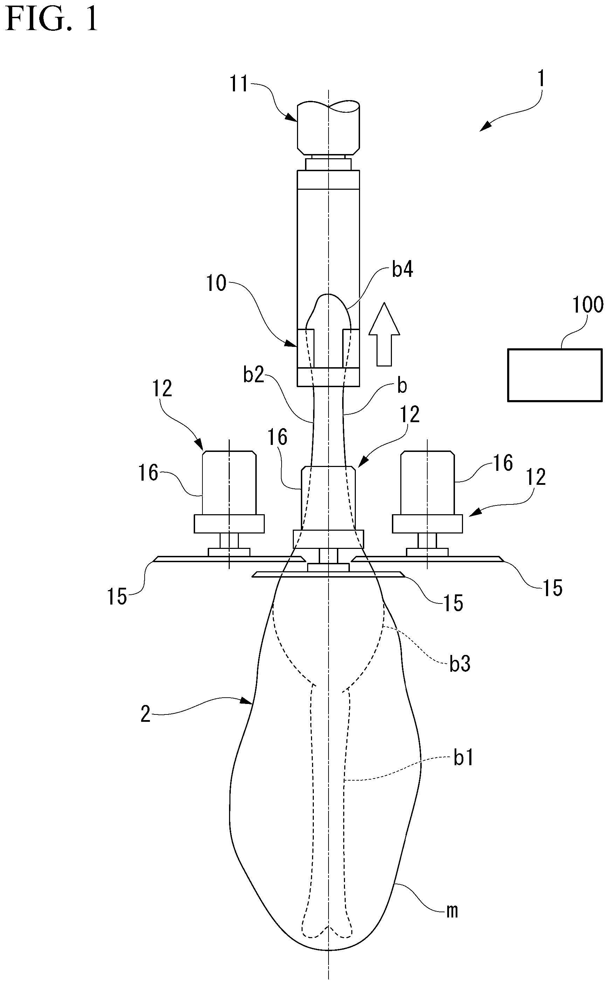

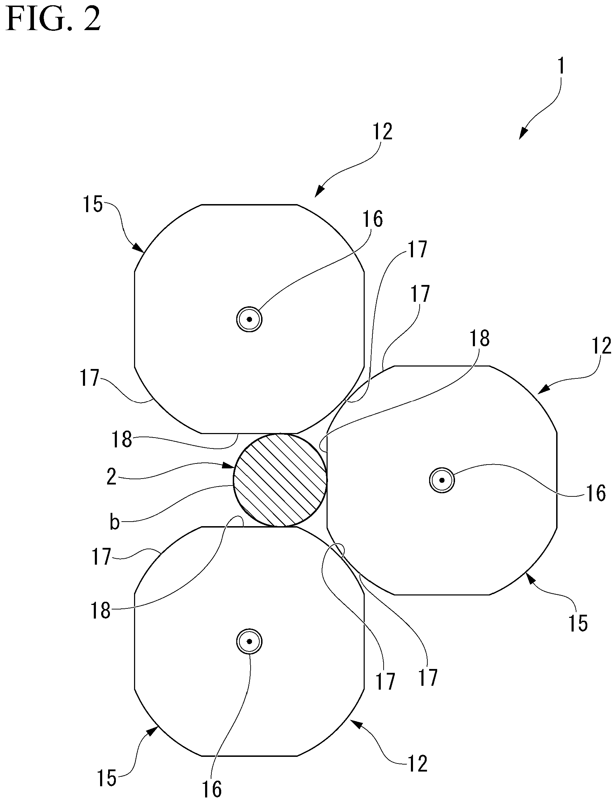

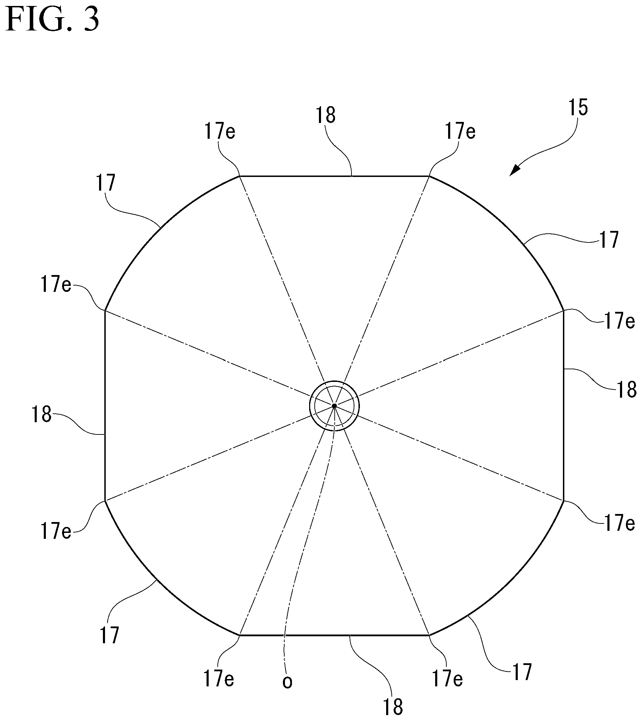

FIG. 1 is a front view of a slicing device 1 of this embodiment. FIG. 2 is a top view of a plurality of cutter devices 12 according to the embodiment of the present invention. FIG. 3 is a top view of a round slicing blade 15 according to the embodiment of the present invention.

The slicing device 1 is a device for separating a meat part from a workpiece, in which the meat part (a separating target part) is present around a core part extending in a longitudinal direction, by slicing. For example, the slicing device 1 is used to separate a meat part m from a bone part b of bone-in meat 2 (a workpiece) such as poultry leg meat. In the following, poultry leg meat which is the bone-in meat 2 will be described as an example of the workpiece. In the poultry leg meat (the bone-in meat 2), a femur b1 and a tibia b2 are connected by a knee joint b3, and an ankle b4 is connected to an end portion of the tibia b2.

The slicing device 1 shown in FIG. 1 includes a clamper 10 (a workpiece holding part) that holds the ankle b4 (the bone part b) with the bone-in meat 2 facing downward, a lifting device 11 (a relative movement device) that raises and lowers the clamper 10, a plurality of cutter devices 12 that separates the meat part m from the bone part b of the bone-in meat 2 by slicing in cooperation with a lifting operation of the clamper 10, and a cutter moving device (a slicing position operating part) 100 that moves the cutter devices 12 toward and away (to displace positions of the cutter devices 12) from the bone-in meat 2, which moves relatively in an up-down direction (a slicing direction) in a horizontal direction (a direction intersecting the slicing direction). In this embodiment, as shown in FIG. 2, three cutter devices 12 are disposed so as to surround the bone part b of the bone-in meat 2 suspended by the clamper 10. However, the number of installed cutter devices 12 is not limited to three.

The slicing device 1 shown in FIG. 1 is installed at a processing station that separates the meat part m from the bone part b of the bone-in meat 2 by slicing, and the bone-in meat 2 is conveyed from another processing station after being pre-processed. In other processing stations at the previous stages, for example, cut processing is performed with respect to the meat part m around an end portion of the tibia b2 on the ankle b4 side, slit-forming processing is performed on the meat part m in the longitudinal direction of the bone part b, and the like. The common clamper 10 moves between the processing stations while holding the ankle b4 of the bone-in meat 2.

The clamper 10 has a structure capable of holding and releasing the ankle b4 of the bone-in meat 2.

The lifting device 11 moves the bone part b of the bone-in meat 2 relative to the cutter device 12 in the up-down direction by raising the clamper 10 holding the bone part b (the ankle b4) of the bone-in meat 2 at a predetermined speed. In this embodiment, the lifting device 11 raises the bone part b of the bone-in meat 2 upward with respect to the cutter device 12 of which a position in the up-down direction is fixed, and thus the meat part m can be sliced away by the cutter device 12. In this embodiment, the lifting device 11 constitutes a relative movement device.

However, it is also possible to fix the bone part b of the bone-in meat 2 with the clamper 10 and to move the cutter device 12 downward. In this case, a device that moves the cutter device 12 downward constitutes the relative movement device.

The cutter device 12 includes a round slicing blade 15 that rotates in a horizontal posture, and a drive unit 16 that rotates the round slicing blade 15. The drive unit 16 of each of the cutter devices 12 is held by a corresponding cutter moving device.

For example, the cutter moving device includes an arm part that is horizontally rotatable around a drive shaft, and the cutter device 12 (the drive unit 16) is held at a tip end of the arm part. Each of the arm parts of the cutter moving device horizontally moves the round slicing blade 15 of the cutter device 12 from an initial position having a gap from the bone part b of the bone-in meat 2 to a position close to the bone part b (hereinafter, referred to as a "proximity position"). Further, after the round slicing blade 15 cuts the meat part m of the bone-in meat 2, the cutter moving device horizontally moves the round slicing blade 15 of the cutter device 12 to the initial position having a gap from the bone part b of the bone-in meat 2. The cutter moving device includes an actuator (not shown) such as an air cylinder for moving the round slicing blade 15 of the cutter device 12 between the initial position and the proximity position via the arm part. A biasing part such as a spring member for biasing the cutter device 12 in a direction of an outer peripheral surface of the bone part b of the bone-in meat 2 is provided on any one of the actuator and the arm part.

When the three cutter devices 12 are moved to the proximity positions by the cutter moving device, each of the round slicing blades 15 surrounds the bone part b of the bone-in meat 2 at equal intervals.

In the round slicing blade 15 shown in FIG. 3, a plurality of (for example, four) blade surfaces 17 each having an arc shape are disposed to be spaced apart from each other around a rotation center o of a round blade main body on the outer peripheral portion of the round blade main body having a disc shape and of which a center portion is connected to a rotating shaft of the drive unit 16. Further, a non-blade surface portion 18 is arranged between the adjacent blade surfaces 17 on the outer peripheral portion of the round blade main body. Each of the blade surfaces 17 is formed such that ridge lines of the respective blade edges are arranged on a circumference of a constant radius centered on the rotation center o. Further, the blade edge of each of the blade surfaces 17 converges toward the outside of the round blade main body in a radial direction, and is formed so that the ridge lines of the rotating blade edges are aligned in a straight line when the round blade main body is seen in a direction perpendicular to a rotation axis.

In the case of this embodiment, the blade surfaces 17 and the non-blade surface portions 18 disposed on the outer peripheral portion of the round blade main body are alternately formed in equiangular regions around the rotation center o.

Further, in the non-blade surface portion 18 formed on the outer peripheral portion of the round blade main body, an outer end portion thereof in the radial direction is located radially inward with respect to a ridge line portion of the blade edge of the blade surface 17 (an outer end portion of the blade surface in the radial direction). Specifically, the outer edge portion of the non-blade surface portion 18 in the radial direction is formed in a linear shape that connects end portions 17e of the blade edges of the adjacent blade surfaces 17 in a circumferential direction.

The round slicing blade 15 is rotated by power of the drive unit 16, and in this state when the outer peripheral portion of the round blade main body is pressed in the horizontal direction against the bone part b of the bone-in meat 2 and the meat part m in a vicinity thereof, the blade surface 17 and the non-blade surface portion 18 on the outer peripheral portion of the round blade main body alternately face a direction toward the bone part b of the bone-in meat 2. Therefore, when the round blade main body rotates, cutting of the meat part m by the blade surface 17 and pressing against the bone part b by the non-blade surface portion 18 (release of the cutting-in of the blade surface) are performed alternately.

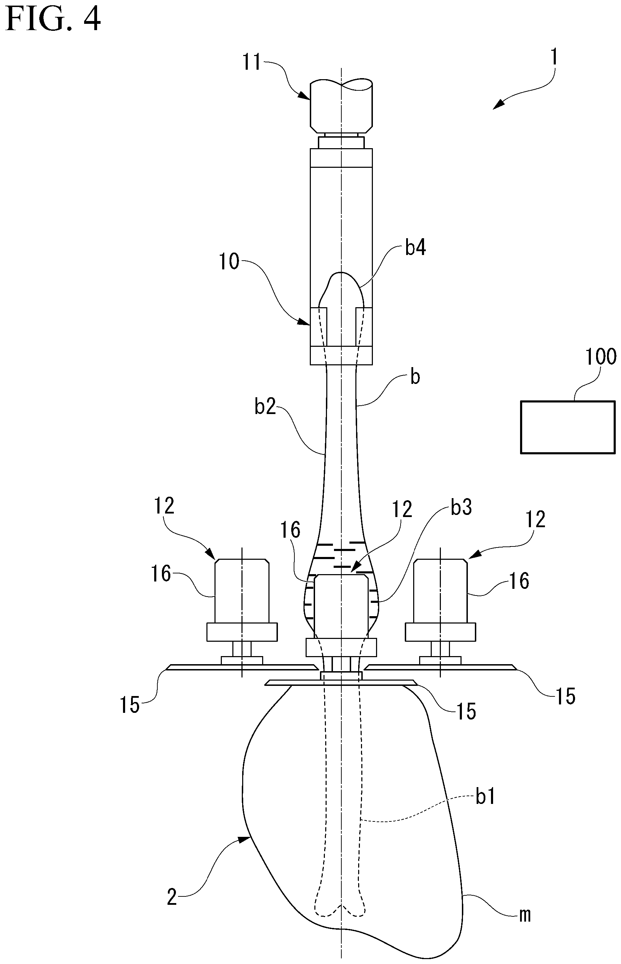

FIG. 1 shows a state in which the round slicing blade 15 of the cutter device 12 is slicing the meat part m around the tibia b2 of the bone-in meat 2. On the other hand, FIG. 4 shows a state in which the round slicing blade 15 of the cutter device 12 is slicing the meat part m from the knee joint b3 to a part of the femur b1 of the bone-in meat 2. FIG. 4 is a front view of the slicing device 1 similar to FIG. 1.

In a state shown in FIG. 4, when the bone-in meat 2 held by the clamper 10 passes through the round slicing blade 15 of the cutter device 12, the tendons and fascia around the knee joint b3 are sequentially sliced away by the round slicing blade 15 along with other surrounding meat parts m.

Next, details of a slicing process (a slicing method) of the bone-in meat 2 by the slicing device 1 will be described.

The bone-in meat 2 held by the clamper 10 and located at a lowered position has undergone the cutting processing with respect to the meat part m around an end portion of the tibia b2 closer to the ankle b4 and the slit-forming processing on the meat part m along the longitudinal direction of the bone part b at another processing station in the previous stage.

From this state, when the clamper 10 is lifted upward by the lifting device 11, and when a cut portion at the end portion of the tibia b2 of the bone-in meat 2 approaches an installation height of the cutter device 12, the cutter moving device is operated to move the round slicing blades 15 of the plurality of cutter devices 12 to a position close to the bone part b. At this time, the round slicing blade 15 of each of the cutter devices 12 are being rotated by the driving of the drive unit 16, and the outer peripheral portion of the round blade main body comes into contact with the outer peripheral surface of the bone part b via the cut portion of the meat part m.

As the bone part b continues to rise via the clamper 10 from this state, the meat part m is continuously sliced away from the outer periphery of the bone part b from the upper side toward the lower side by the rotation of the round slicing blade 15. At this time, since each of the cutter devices 12 is elastically biased in the direction toward the bone part b by an biasing part (not shown), the outer peripheral portion of the round slicing blade 15 of each of the cutter devices 12 follows a change in a shape of an outer surface of the bone part b and continues to be in contact with the bone part b (a position of the outer peripheral portion of the round slicing blade 15 of each of the cutter devices 12 is displaced so as to follow the change in the shape of the outer surface of the bone part b).

For example, when a portion near the knee joint b3 of the bone-in meat 2 moves up to the round slicing blade 15 of each of the cutter devices 12 due to the rise of the bone part b via the clamper 10, the tendons and fascia connected to the knee joint b3 are continuously sliced away together with other meat parts m by the rotating round slicing blade 15. Since the knee joint b3 has a complex external shape and is a part in which cartilage and hard bones are mixed, the blade edge of the blade surface of the rotating round slicing blade 15 easily cuts into the cartilage and hard bones of the knee joint b3. However, since the blade surfaces 17 having an arc shape and the non-blade surface portions 18 of which end portions in the radial direction are located inside the blade surfaces 17 are disposed alternately on the outer peripheral portion of the round blade main body of the round slicing blade 15, the non-blade surface portion 18 suppress the blade surface 17 cutting into the cartilage or hard bones.

In this way, when an upper end portion of the femur b1 of the bone-in meat 2 rises to a height position of the round slicing blade 15 of each of the cutter devices 12, the slicing of the meat part m by the round slicing blade 15 ends at that point.

As described above, in the round slicing blade 15 according to the present embodiment, when the round blade main body rotates, since the blade surfaces 17 and the non-blade surface portions 18 on the outer periphery of the round blade main body alternately face the bone-in meat 2 (the workpiece), it is possible to suppress the blade edge cutting into the bone part b (the core part) of the bone-in meat 2. In particular, in the round slicing blade 15 of the present embodiment, since an outer end portion of the non-blade surface portion 18 in the radial direction is located radially inward with respect to a ridge line portion (an outer end portion of the blade surface in the radial direction) of the blade edge of the adjacent blade surface 17, the cutting-in of the blade surface 17 into the bone part b can be quickly released at a terminal end portion of each of the blade surfaces 17 in a rotating direction.

Therefore, when the round slicing blade 15 of this embodiment is adopted, due to the smooth slicing with respect to the meat part m, a decrease in the yield of the meat part m as a product, deterioration in the quality such as hole opening, and the like can be suppressed, and the mixing of residual bones into the meat part m and the occurrence of chipping of the blade edge due to the blade edge cutting into the bone part b can be suppressed.

Further, in the round slicing blade 15 of this embodiment, an outer edge portion of the non-blade surface portion 18 in the radial direction is formed in a linear shape that connects the end portions 17e of the blade edges of the adjacent blade surfaces 17 in the circumferential direction. Therefore, a concave stepped portion is not formed between the blade surface 17 and the non-blade surface portion 18 on the outer periphery of the round blade main body. Therefore, when such a configuration is adopted, when the round blade main body is rotated, even when a starting end portion or a terminal end portion of the blade surface 17 in the rotating direction comes into contact with a hard portion or a sharp portion of the bone part, chipping of the blade surface 17 is less likely to occur.

In addition, in the case of such a configuration, since a concave stepped portion is not formed between the blade surface 17 and the non-blade surface portion 18, when the meat part m is sliced away by the round slicing blade 15, pieces of the separated meat part m are less likely to be caught at the starting end portion and the terminal end portion of the blade surface 17 in the rotating direction. As a result, the slicing of the meat part m is not obstructed by accumulation of pieces of meat on the round slicing blade 15, and it becomes possible to continue separating the meat part m smoothly.

Further, in the slicing device 1 of this embodiment, the cutter moving device 100 which is a slicing position operating part is equipped with a biasing part such as a spring member that biases the round slicing blade 15 of the cutter device 12 in the direction toward the bone part b of the bone-in meat 2. Therefore, when the bone-in meat 2 is sliced away, the outer peripheral portion of the round slicing blade 15 is elastically pressed against the outer peripheral surface of the bone part b by an appropriate biasing force, and the round slicing blade 15 can be made to smoothly follow the outer surface shape of the bone part b. A position of the outer peripheral portion of the round slicing blade 15 of each of the cutter devices 12 can be displaced to follow a change in a shape of the outer surface of the bone part b.

Therefore, when the slicing device 1 of this embodiment is employed, the yield of the separated meat part m which is a product can be further increased.

The use of the round slicing blade 15 of this embodiment is not limited to slicing of bone-in meat 2, and it can be used for slicing various types of workpieces as long as the workpiece has a meat part (not limited to edible meat) around a core part that is harder than other parts.

However, when the round slicing blade 15 is used to slice away the meat part m of the bone-in meat 2 as in this embodiment, even there is a complicated joint between the bone parts b such as the knee joint b3, and cartilage and hard bones are mixed in a complicated manner in bone part b, it is possible to reliably slice away the meat part m from the bone part b, which was thought to be difficult in the related art.

The present invention is not limited to the above-described embodiments, and various design changes are possible without departing from the scope thereof.

For example, in the above embodiment, the outer edge portion of the non-blade surface portion 18 of the round blade main body in the radial direction is formed in a linear shape that connects the end portions 17e of the blade edges of the adjacent blade surfaces 17 in the circumferential direction, but the shape of the outer edge portion of the non-blade surface portion 18 in the radial direction is not limited thereto. The shape of the outer edge portion of the non-blade surface portion 18 in the radial direction may be a non-linear shape including at least a portion of a curved portion.

However, when the outer edge portion of the non-blade surface portion 18 in the radial direction has a non-linear shape, preferably, the shape does not protrude from the region between the straight line connecting the end portions 17e of the blade edges of adjacent blade surfaces 17 in the circumferential direction and a virtual circle passing through the blade edges of the blade surfaces 17. In this case, it is particularly advantageous from the viewpoint of maintaining strength of the blade surface 17 and preventing pieces of meat from being caught.

### [Reference Signs List]

1 Slicing device
2 Bone-in meat (workpiece)
10 Clamper (workpiece holding part)
11 Lifting device (relative movement device)
12 Cutter device
15 Round slicing blade
17 Blade surface
18 Non-blade surface portion
100 Cutter moving device (slicing position operating part)

## Claims

1. A round blade for slicing wherein
a plurality of blade surfaces each having an arc shape and centered on a rotation center of a round blade main body are disposed to be spaced apart from each other on an outer peripheral portion of the round blade main body, and a non-blade surface portion is disposed between the adjacent blade surfaces, and
an outer end portion of the non-blade surface portion in a radial direction is located radially inward with respect to an outer end portion of the blade surface in the radial direction.

2. The round blade for slicing according to claim 1, wherein an outer edge portion of the non-blade surface portion in the radial direction is formed in a linear shape that connects end portions of blade edges of the adjacent blade surfaces in a circumferential direction.

3. A slicing device comprising:
a cutter device having the round blade for slicing according to claim 1 or 2;
a workpiece holding part configured to hold a workpiece;
a relative movement device configured to relatively move the workpiece holding part and the cutter device in a slicing direction in which a meat part of the workpiece is sliced; and
a slicing position operating part configured to move the round blade for slicing of the cutter device toward and away with respect to the workpiece, that moves relatively in the slicing direction, in a direction intersecting the slicing direction.

4. The slicing device according to claim 3, wherein the workpiece is bone-in meat with a meat part attached to a bone part,
the workpiece holding part holds the bone part of the bone-in meat, and
the cutter device slices the meat part of the bone-in meat from the bone part.

5. A slicing method for a workpiece, comprising:
while rotating the round blade for slicing according to claim 1 or 2, relatively moving the workpiece and the round blade for slicing in a slicing direction; and
displacing the round blade for slicing from a direction intersecting the slicing direction with respect to the relatively moving workpiece.

6. The slicing method for a workpiece according to claim 5, wherein the workpiece is bone-in meat with a meat part attached to a bone part, and
a position of the slicing blade in a direction intersecting the slicing direction is displaced along an outer surface shape of the bone part with respect to the bone-in meat that moves relatively in a longitudinal direction of the bone part.
